# EUROPÄISCHE PATENTSCHRIFT

(11) **EP 0 405 186 B1**
(45) Veröffentlichungstag und Bekanntmachung des Hinweises auf die Patenterteilung: **15.09.1993**
(21) Anmeldenummer: 90110555.1
(22) Anmeldetag: 05.06.1990
(51) Int. Cl.: B64G 1/22, G06F 15/50

(54) **Einrichtung zur Sicherstellung der Einsatzbereitschaft von Raumfahrzeugen im Orbit**
Arrangement for ensuring operation-readiness of spacecraft in orbit
Agencement pour assurer la disponibilité de la mise en service d'un véhicule de l'espace en orbite

(30) Priorität: 29.06.1989 DE 3921281
(43) Veröffentlichungstag der Anmeldung: 02.01.1991
(73) Patentinhaber: ERNO Raumfahrttechnik Gesellschaft mit beschränkter Haftung, D-28199 Bremen (DE)
(72) Erfinder: Boeck, Hans-Joachim, D-2870 Delmenhorst (DE); Fryen, Jürgen, D-2803 Weyhe (DE); Häbel, Wolfgang, D-2875 Ganderkesee 2 (DE); Schafhauser, Erich, D-2804 Lilienthal (DE)

(56) Entgegenhaltungen:
- DE-A- 1 531 556
- DE-A- 3 432 165
- US-A- 3 787 816
- ELECTRONICS, Band 43, März 1970, Seiten 108-115; A. ROSENBLATT: ""TOPS" trails to outer planets map a new route to reliability"

## Beschreibung

Die Erfindung bezieht sich auf eine Einrichtung zur Sicherstellung der Einsatzbereitschaft von Raumfahrzeugen im Orbit durch mehrfache Implementierung und betriebsabhängige Aktivierung einzelner Baugruppen und Erfassung sowie Überwachung der Systemfunktionen.

Bei Raumfahrzeugen ist es bekannt, diese für den Einsatz im erdnahen Bereich als wiederverwendbare Systeme auszulegen. Solche Raumfahrzeuge können daher mit entsprechenden Hilfsmitteln nach Rückkehr aus dem Weltraum auf der Erde gewartet und gegebenenfalls instandgesetzt werden. Raumfahrzeuge, welche tief in den Weltraum eindringen, können dagegen weder gewartet noch instandgesetzt werden und daher gelten diese Raumfahrzeuge nach Ablauf ihrer Betriebszeit oder bei Störungen als verloren. Dies ist natürlich unbefriedigend und daher werden insbesondere aus wirtschaftlichen Gründen Raumfahrzeuge für den erdnahen Bereich mit Wartungs- Reparatur- und Nachrüstmöglichkeiten im Orbit während des Betriebes verlangt.

Wie aus der DE-C2 34 32 165 hervorgeht, ist es zur automatischen Rekonfiguration intakter Gerätekombinationen bekannt, Gerätepaare zu benutzen und mit einem Fehlerdetektor zu überwachen, damit bei Störungen auf eine intakte Gruppe der Gerätekombination umgeschaltet werden kann. Dazu sind dort Speicherschaltungen mit der Anzahl der Gerätepaare entsprechender nicht flüchtiger Speicher vorgesehen, welche in Abhängigkeit ihrer zwei Speicherzustände nachgeordnete Logikschaltungen zum Ein- bzw. Abschalten eines Gerätes der Gerätepaare beeinflussen. Es ist daher möglich, redundante Gerätesysteme, insbesondere auf dem Gebiet der Raumfahrt, hinsichtlich besonders kritischer Funktionsparameter dauernd zu überwachen und in gewissen Zeitabständen einer gründlichen Fehlersuche zu unterziehen.

Aus der "Electronics", Bd. 43, März 1970, Seiten 108-115; A. Rosenblatt: "TOPS trails to outer planets map a new route to reliability" ist es bekannt, ein Raumfahrzeug, das zum Einsatz im Orbit vorgesehen ist, mit redundanten Systemen auszustatten, die entsprechend ihrer jeweiligen Funktionsfähigkeit eingesetzt werden. Insbesondere ist daran gedacht, mindestens eine dreifache Redundanz vorzusehen. Die Aktivierung und Reaktivierung der einzelnen Baugruppen erfolgt adaptiv und automatisch. Es ist eine Fehlererkennung vorgesehen, die über eine Steuereinheit die jeweiligen Akti vierungsfunktionen durchführt. Insbesondere mit Hilfe von Sensoren können Selbsttests durchgeführt werden, die von einem Auswertungscomputer analysiert werden. Ein Datenspeicher dient zur Sicherstellung der jeweiligen Betriebsdaten. Mit Hilfe des Auswertungscomputers kann ein Test, eine Reparatur sowie eine Instandhaltung im Bereich aller Subsysteme durchgeführt werden. Es werden jedoch ausschließlich isoliert die Eigenschaften der jeweiligen Baugruppen betrachtet. Bei einem Ausfall bei einer bestimmten spezifischen Baugruppe wird diese Baugruppe durch eine identische Baugruppe ersetzt, falls noch eine funktionsfähige gleichartige Baugruppe verfügbar ist. Eine Berücksichtigung der dynamischen Verkopplungen der jeweiligen Systemfunktionen erfolgt jedoch nicht.

Der Erfindung liegt daher die Aufgabe zugrunde, eine Einrichtung zur Sicherstellung der Einsatzbereitschaft von Raumfahrzeugen zu schaffen, welche über der gesamten Lebensdauer eine Wartung, Instandsetzung und Modifizierung des Raumfahrzeuges bei laufendem Betrieb gestattet.

Diese Aufgabe wird erfindungsgemäß dadurch gelöst, daß Systemfunktionen und Systemparameter des Raumfahrzeuges unter Berücksichtigung ihrer Abhängigkeiten zu statischen Präsentationen zusammengefaßt werden, die zunächst lediglich zeitunabhängige Eigenschaften wiedergeben, unter Einbeziehung von Wartungsbedingungen und funktionellen Baugruppenaustauschbedingungen die statischen Präsentationen zu Funktionsketten zusammengefaßt sind und funktionelle Systemstrukturen definieren, die über eine dynamische Präsentation der akkumulierten Systemverhaltensweisen, bei denen die physikalischen Baugruppenaustauschbedingungen und Informationen über die jeweilige Betriebsbereitschaft der einzelnen physikalischen Baugruppen und deren funktioneller Verkettung, Verkoppelung und Hierarchie berücksichtigt sind, in einer interaktiven dialogorientierten Umwelt eine Optimierung der physikalischen Struktur und Instrumentierung durch Konfigurierung, Aktivierung und Deaktivierung der einzelnen Baugruppen bestimmen.

Die Einsatzbereitschaft kann dabei die korrektive und präventive Wartbarkeit, Versorgbarkeit und Aufrüstbarkeit für die gesamte Lebens- und Betriebsdauer von bemannten und unbemannten Raumfahrzeugen im Orbit umfassen. Außerdem ist es zweckmäßig, zur recourcenoptimalen Ermittlung der Raumfahrzeugsysteme die Startmasse, den Stromverbrauch, die Systemverfügbarkeit und die Servicemasse systemorientiert in hinreichend feinstrukturierte Basisbausteine aufzuteilen. Hierdurch ergibt sich der Vorteil, die Basisbausteine für eine systemoptimale Strukturierung von im Orbit austauschbaren Einheiten verknüpfbar, bewertbar, reproduzierbar, variierbar und modifizierbar auszulegen.

Weiterhin ist es zweckmäßig, die Instrumentierung zur eindeutigen und autonomen Erfassung, Identifizierung, Eingrenzung und Selbstheilung von Fehlern in aktiven sowie passiven und redundanten System für eine Gruppe von Raumfahrzeugen unterschiedlicher Einheiten einheitlich auszulegen.

Die erfindungsgemäße Maßnahme gewährleistet somit die Einsatzbereitschaft von Raumfahrzeugen während der gesamten Lebensdauer im Orbit. Neben dem technischen Konzept des Raumfahrzeuges ist noch ein Wartungs- und Fehlererkennungskonzept notwendig, das ständig mit dem technischen Konzept in wechselseitiger Beeinflussung und kaleidoskopartiger Variation der Basisbausteine harmonisiert wird. Die Einrichtung konzentriert sich dabei auf zwei Hauptbereiche; und zwar auf sog. ORUs (ORU = Orbit replaceable Unit, im Orbit austauschbare Einheit) sowie auf die Fehlererfassung bzw. Isolierung und Rekuperation. Die im Orbit austauschbaren Einheiten haben unterschiedliche Inhalte und sind für die Wartbarkeit am laufenden System im Orbit ausgelegt. Diese Auslegung umfaßt die autonome Fehlerbestimmung bis auf ORU-Ebene für unterschiedliche Raumfahrzeuge, den Aufbau von Systemen und deren Aufteilung auf ORU-Einheiten derart, daß die Sicherheit von Raum- und Wartungsfahrzeugen gerade auch während tief in das Eigenleben des Raumfahrzeuges eingreifenden Wartungsvorgängen jederzeit gewährt ist. Die Aufteilung der ORU-Einheiten wird dabei so gewählt , daß bei Einhaltung von Grenzen für Start- und Rückführlasten das Wartungsfahrzeuges sich lebenserhaltende und kostenoptimale Wartungsintervalle für die Raumfahrzeuge ergeben. Außerdem muß das Nachrüsten und Aufrüsten auch komplexer Funktionen im Orbit möglich sein.

Bei der Fehlererfassung, der Isolierung und der Rekuperation erfolgt die Überwachung und Beeinflussung aktiver und passiver sowie redundanter Systeme in der Weise, daß eine autonome Fehlerlokalisierung bis zur ORU-Ebene erfolgt. Diese Fehlererkennung muß zuverlässig sein, damit die richtigen Service-Proceduren vorbereitet werden können. Außerdem muß die Fehlererkennung hinreichend für Einleitung und Durchführung bordautonomer, betriebssichernder Entscheidungen und Selbstheilungsprozesse sein und die Diagnosefähigkeit muß selbst im sicheren Notbetrieb gewährleistet bleiben. Dazu muß die Einrichtung eine außerordentliche Menge von Verknüpfungskombinationen und schnellen Variationen hoher Qualität ermöglichen und ein auf Anhieb ausgereiftes reales Objekt garantieren.

Die Erfindung wird anhand einer Übersichtsdarstellung näher erläutert.

Die Übersichtdarstellung zeigt als Eingangsparameter die für die Bestimmung eines Raumfahrzeuges dienen die Systemfunktionen (1 ...m; n ...z), wie bemanntes oder unbemanntes System sowie den Grad der eigenen Autonomie, z.B. Bereitstellung aller erforderlichen Resourcen durch das System selbst, autonome Entscheidungsgewalt des "Raum"-Segments ohne permanente Unterstützung des "Boden"-Segments. Die Summe alle Systemfunktionen sowie deren Einflüsse und Abhängigkeiten untereinander werden durch die statischen Präsentationen A ...B definiert.

Wesentliche Einflüsse auf die Ableitung der Funktionsketten haben die Wartungsszenarien (a ...f), wobei folgende Differenzierung zu berücksichtigen ist:
1. Wartung bemannter Systeme durch den Menschen in geschützter Umwelt. In diesem Falle kann die Wartung auf sehr niedriger Ebene (z.B. Geräte) stattfinden, d.h. der Einfluß auf das Zuordnen von Funktionen zu wartbaren Einheiten ist gering und es ergeben sich lose Verknüpfungen als funktionelle ORU Bedingung (g ...k).
2. Wartung durch den Menschen in ungeschützter Umwelt. In diesem Szenario ist eine Grundvoraussetzung, die absolut eindeutige Lokalisierung auf wartbare/austauschbare Einheiten. Aufgrund der limitierten Zeit, die ein Mensch in einem ungeschützten Umfeld verbringen kann, sowie der erheblich eingeschränkten Beweglichkeit muß hier die wartbare Einheit auf höherer Ebene angesiedelt werden; wobei die Untermengen möglichst mit denen von Szenario 1 identisch sein sollen. Hieraus ergeben sich feste Verknüpfungen von Einzelfunktionen zu Funktionsketten, die im Fall der Wartung jedoch nicht zur Beeinflussung der Systemsicherheit führen dürfen.
3. Wartung durch unbemannte Systeme (Robotics). Für die Durchführung der Wartung gibt es in diesem Szenario keine wesentliche Zeiteinschränkung, d.h. in erster Näherung kann eine gleiche Aufteilung wie im Szenario 1 zur Anwendung kommen. Bei der Handhabung durch Roboter ergeben sich jedoch Einflüsse aus physikalischen Einschränkungen (e ...o), wie Genauigkeit und Zugänglichkeit, die eine Aufteilung erfordern, die zwischen Szenario 1 und 2 anzusiedeln ist, d.h. es ergeben sich feste Verknüpfungen auf einer niedrigeren Ebene als Szenario 2.
4. Kombination aus 1 ...3. Die entsprechenden Systemkonfigurationen und Wartungsszenarien abgeleiteten funktionellen Systemstrukturen (A ...B) beinhalten zunächst noch keine Zuordnung der notwendigen Redundanzen.

Diese werden von Systemverfügbarkeisanforderungen (p ...t) bestimmt. Während der Versorgung, z.B. Nachtanken oder Austausch von fehlerhaften Einheiten muß das System weiterhin sicher sein d.h. eine minimale Anzahl von Funktionen muß voll verfügbar sein, (z.B. Lageregelung), während andere in einem reduzierten Betriebszustand sein dürfen (z.B. Energieerzeugung).

Dadurch ergeben sich durch unterschiedliche Missionsphasen unterschiedliche Detriebszustände, welche die physikalische Struktur der Funktionen bestimmen.

Unter weiterer Berücksichtigung aller anzunehmenden Fehler, sowie deren Erkennung und Behebung (p ...x), ergeben sich vielfältige bekannte Betriebszustände, wodurch die Notwendigkeit dynamischer Präsentationen der Systeme entsteht.

Aus diesen dynamischen Präsentationen werden die Flugkonfigurationen (A ...B) funtionell und physikalisch abgeleitet sowie die zugehörige Instrumentierung (l..m; n..z) bestimmt. Dabei ist ein besonderes Ziel, die Systemstrukturen auf identischen Einheiten aufzubauen, d.h. identische Geräte zu wartbaren Einheiten zusammenzufügen und ein für alle Szenarien identische Basisinstrumentierung zu bestimmen.

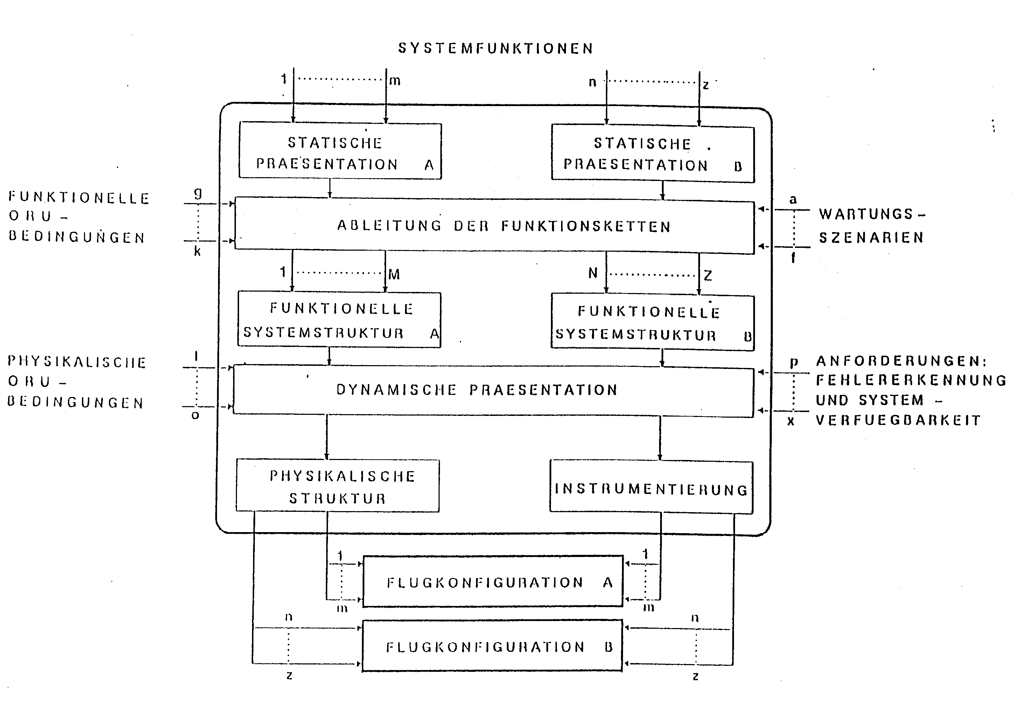

## Patentansprüche

1. Einrichtung zur Sicherstellung der Einsatzbereitschaft von Raumfahrzeugen im Orbit durch mehrfache Implementierung und betriebsabhängige Aktivierung einzelner Baugruppen und Erfassung sowie Überwachung der Systemfunktionen, dadurch gekennzeichnet, daß Systemfunktionen und Systemparameter des Raumfahrzeuges unter Berücksichtigung ihrer Abhängigkeiten zu statischen Präsentationen zusammengefaßt werden, die zunächst lediglich zeitunabhängige Eigenschaften wiedergeben, unter Einbeziehung von Wartungsbedingungen und funktionellen Baugruppenaustauschbedingungen die statischen Präsentationen zu Funktionsketten zusammengefaßt sind und funktionelle Systemstrukturen definieren, die über eine dynamische Präsentation der akkumulierten Systemverhaltensweisen, bei denen die physikalischen Baugruppenaustauschbedingungen und Informationen über die jeweilige Betriebsbereitschaft der einzelnen physikalischen Baugruppen und deren funktioneller Verkettung, Verkoppelung und Hierarchie berücksichtigt sind, in einer, interaktiven dialogorientierten Umwelt eine Optimierung der physikalischen Struktur und Instrumentierung durch Konfigurierung, Aktivierung und Deaktivierung der einzelnen Baugruppen bestimmen.

2. Einrichtung nach Anspruch 1, dadurch gekennzeichnet, daß die Einsatzbereitschaft eine korrektive und präventive Wartbarkeit, Versorgbarkeit und Aufrüstbarkeit für die gesamte Lebens- und Betriebsdauer eines bemannten und/oder unbemannten Raumfahrzeuges im Orbit umfaßt.

3. Einrichtung nach Anspruch 1 oder 2, dadurch gekennzeichnet, daß zur recourcenoptimalen Ermittlung der Raumfahrzeugsysteme die Startmasse, der Stromverbrauch, die Systemverfügbarkeit und die Servicemasse systemorientiert in hinreichend feinstrukturierte Basisbausteine aufgeteilt sind.

4. Einrichtung nach einem der Anspräche 1 bis 3, dadurch gekennzeichnet, daß die Basisbausteine für eine systemoptimale Strukturierung von im Orbit austauschbaren Einheiten verknüpfbar, bewertbar, reproduzierbar, variierbar und modifizierbar sind.

5. Einrichtung nach einem der Anspräche 1 bis 4, dadurch gekennzeichnet, daß die Instrumentierung zur eindeutigen und autonomen Erfassung, Identifizierung, Eingrenzung und Selbstheilung von Fehlern in aktiven sowie passiven und redundanten System für eine Gruppe von Raumfahrzeugen unterschiedlicher Einheiten einheitlich ausgelegt sind.

## Claims

1. Apparatus for ensuring the readiness for operation of space vehicles in orbit by multiple implementation and actuation dependent on operation of individual operating units and determination as well as monitoring of the system functions, characterised in that system functions and system parameters of the space vehicle are combined to form a static presentation taking account of their interdependence, which presentations at first merely reproduce time independent properties, taking account of the requirements for maintenance and for the exchange of functional operating units the static presentations are combined to form function chains and define functional system structures, which via a dynamic presentation of the accumulated system behaviours - in which the physical requirements for the exchange of operating units and information concerning the readiness for operation at any time of the individual physical operating units and their functional chaining, coupling and hierarchy are taken account of - in an interactive, dialogue-orientated environment define an optimisation of the physical structure by configuration, activation and deactivation of the individual operating units.

2. Apparatus according to claim 1, characterised in that the readiness for operation includes a corrective and preventative serviceability, supportability and reassemblability for the entire life and operating period of a manned and/or unmanned space vehicle in orbit.

3. Apparatus according to claim 1 or 2, characterised in that to ensure resource-optimised investigation of the space vehicle system, the starting mass, the current usage, the system availability and the service mass are divided up in system-orientated fashion into sufficiently finely structured basic building blocks.

4. Apparatus according to any one of claims 1 to 3, characterised in that the basic building blocks, to provide a system-optimum structure of units which can be exchanged in orbit, must be interconnectible, assessable, reproducible, variable and modifiable.

5. Apparatus according to any one of claims 1 to 4, characterised in that the instrumentation for the unambiguous and autonomous determination, identification, limitation and self-correction of errors in active and passive and redundant systems for a group of space vehicles with different units is uniformly designed.

## Revendications

1. Installation pour garantir l'aptitude au fonctionnement d'engins spatiaux sur orbite par une mise en oeuvre multiple et une activation selon le fonctionnement de différents groupes et pour la détection ainsi que la surveillance des fonctions du système, installation caractérisée en ce que les fonctions du système et les paramètres du système de l'engin spatial sont réunis en prenant en compte leur dépendance par rapport à la présentation statique, qui représente tout d'abord seulement les propriétés indépendantes en prenant en compte les conditions d'entretien et les conditions d'échange fonctionnel de modules qui sont réunies en des chaînes fonctionnelles pour la présentation statique et définissent des structures de systèmes fonctionnels qui déterminent une optimisation de la structure physique et de l'instrumentation par configuration, activation et désactivation des différents modules par une présentation dynamique des comportements accumulés du système, pour lesquels les conditions d'échange physique des modules et les informations concernant l'aptitude au fonctionnement respective des différents modules physiques et leur combinaison fonctionnelle en chaîne, leur couplage et leur hiérarchie, sont prises en compte dans un environnement orienté sur un dialogue interactif.

2. Installation selon la revendication 1, caractérisée en ce que l'aptitude au fonctionnement comprend un travail d'entretien, de correction et de prévention, un travail d'alimentation et un travail d'équipement pour toute la durée de vie et de fonctionnement d'un engin spatial occupé et/ou non occupé en orbite.

3. Installation selon la revendication 1 ou 2, caractérisée en ce que pour déterminer de façon optimale sur le plan des ressources, les systèmes d'engins spatiaux, on répartit la masse initiale, la consommation en courant, la disponibilité du système et les moyens de service orientés sur le système en des composants de base de structure suffisamment réduite.

4. Installation selon l'une des revendications 1 à 3, caractérisée en ce que les composants de base peuvent être combinés, exploités, reproduits, variés et modifiés pour une structuration optimale du système en orbite.

5. Installation selon l'une des revendications 1 à 4, caractérisée en ce que l'instrumentation est conçue pour une détection autonome et sans équivoque, une identification, une limitation et une autocorrection des défauts dans des systèmes actifs ou passifs et redondants pour un groupe d'engins spatiaux, de façon unitaire dans des unités différentes.
